# EUROPÄISCHE PATENTSCHRIFT

(11) **EP 1 008 515 B1**
(45) Veröffentlichungstag und Bekanntmachung des Hinweises auf die Patenterteilung: **19.01.2005**
(21) Anmeldenummer: 99890365.2
(22) Anmeldetag: 15.11.1999
(51) Int. Cl.: B64C 9/16, B64C 9/32

(54) **Spoiler für Tragflächen**
Aircraft wing spoiler
Aérofrein pour aile d'aéronef

(30) Priorität: 11.12.1998 AT 207998
(43) Veröffentlichungstag der Anmeldung: 14.06.2000
(73) Patentinhaber: Fischer Advanced Composite Components AG, 4910 Ried im Innkreis (AT)
(72) Erfinder: Stephan, Walter A., 4973 St. Martin (AT); Filsegger, Hermann, 4910 Ried im Innkreis (AT)
(74) Vertreter: Sonn, Helmut

(56) Entgegenhaltungen:
- EP-A- 0 216 033
- EP-A- 0 222 421
- US-A- 4 120 470

## Beschreibung

Die Erfindung betrifft einen Spoiler für Tragflächen, insbesondere von Flugzeugen, welcher Spoiler während der Landung und während des Starts des Flugzeuges od. dgl. aufklappbar und während des Reisefluges einklappbar ist, nach dem Oberbegriff des Patentanspruchs 1.

Auch wenn im folgenden ausschließlich auf die Verwendung der erfindungsgemäßen Spoiler für Tragflächen von Flugzeugen einigegangen wird, ist eine Anwendung theoretisch auch bei anderen Fluggeräten und anderen Fahrzeugen, wie z.B. Hochgeschwindigkeitsschiffen oder Hochgeschwindigkeitsautos, denkbar.

Unter dem Begriff Spoiler werden Störklappen an der hinteren Oberseite der Tragflächen verstanden, welche einerseits als Bremsklappen während der Landung und andererseits auch zur Unterstützung des Querruders durch asymmetrischen Einsatz dienen. Der englische Begriff "Spoiler" rührt daher, da dieser einen Widerstand erzeugt und dabei einen Teil des Auftriebs vernichtet.

Die CH 683 982 A5 beschreibt eine Vorrichtung zur Erhöhung des Auftriebes an einem Flugzeugflügel in Form eines Luftleitelements, welches auch als Spoiler nach der Landung dienen kann.

Um die Fortbewegung eines Flugzeuges od. dgl. in der Luft zu ermöglichen, muß auf dieses eine Kraft in entgegengesetzter Richtung zur Erdanziehungskraft wirken. Diese wird durch den durch die Tragflächen bzw. Tragflügel des Flugzeuges gebildeten Auftrieb erzielt. Durch entsprechende Gestaltung des Profils der Tragflächen wird eine Minimierung des Luftwiderstandes gegenüber dem Auftrieb errreicht. Während der Landung des Flugzeuges und zur Reduktion der Landerollstrecke ist eine Verringerung des Auftriebs erforderlich. Zu diesem Zweck befinden sich an der Oberfläche der Tragflächen sogenannte Spoiler oder Stör/Bremsklappen, die während und nach der Landung ausgefahren werden und Widerstand erzeugen.

Zur Bewältigung des Flugverkehrs werden immer größere Flugzeuge für mehr Passagiere und höhere Beladung hergestellt. Größere und schwerere Flugzeuge besitzen ein höheres Landegwicht. Für derartige Flugzeuge ist eine höhere Landegeschwindigkeit erforderlich, wodurch bei der Landung zur Erzielung einer möglichst hohen Vernichtung des Auftriebs die Landeklappen steiler aufgestellt werden als bei kleineren und leichteren Flugzeugen. Durch die besonders steile Anordnung der Landeklappen während der Landung des Flugzeuges entsteht zwischen der hinteren Kante des Spoilers und der Oberfläche der Landeklappe ein ziemlich großer Spalt, der zu unerwünschten aerodynamischen Effekten führt.

Ein Spoiler für Tragflächen der angegebenen Art wird in der EP 0 216 033 A1 beschrieben, wobei eine kontur ausgleichende Platte oberhalb des Spoilers angeordnet ist, welche einen vergleichsweise sehr dünnen Querschnitt aufweist und mit ihrem vorderen Ende an einem vom Spoiler tragenden Beschlag gehaltert ist. Das rückwärtige Ende der Kontur ausgleichenden Platte ist frei beweglich und liegt federnd auf der Oberseite der Hochauftriebsklappe bzw. die Landeklappe auf. Dadurch wird ein praktisch ungestörter Konturübergang zwischen dem Spoiler und der Landeklappe auch bei einer Veränderung der Klappenposition in der Reiseflugphase gewährleistet. Die Kontur ausgleichende Platte gemäß der EP 0 216 033 A1 überdeckt die gesamte Tiefe des Spoilers und ragt über das hintere Ende des Spoilers hinaus. Die Kontur ausgleichende Platte gemäß diesem Dokument bringt nur eine Besserung der aerodynamischen Verhältnisse während des Reiseflugs mit sich, während eine Verbesserung der aerodynamischen Verhältnisse während des Lande- oder Startmanövers nicht stattfindet.

Ziel der vorliegenden Erfindung ist daher die Schaffung eines Spoilers, welcher insbesondere zur Anwendung bei besonders großen und schweren Flugzeugen geeignet ist und verbesserte aerodynamische Verhältnisse während der Landung und während des Starts des Flugzeuges od. dgl. aufweist, ohne daß die aerodynamischen Verhältnisse während des Reisefluges negativ beinflußt werden. Dies bedeutet, daß der Spoiler im höheren Geschwindigkeitsbereich während des Reisefluges die aerodynamischen Verhältnisse nicht negativ beeinflussen soll, während er im niedrigen Geschwindigkeitsbereich während der Landung einen möglichst geringen bzw. definierten Abstand zur Landeklappe haben soll. Die Nachteile bekannter Konstruktionen sollen vermieden oder zumindest reduziert werden. Darüber hinaus soll der Spoiler durch möglichst geringes Gewicht charkterisiert sein.

Gelöst wird die erfindungsgemäße Aufgabe dadurch, daß das Bauelement aus Verbundwerkstoff, insbesondere aus kohlenstoffaserverstärktem Kunststoff, aufgebaut ist, daß der Querschnitt des Bauelements zum freien Ende hin verjüngend ausgebildet ist, und daß das freie Ende des Bauelements in Richtung zur Oberfläche der Tragfläche oder Landeklappe hin gekrümmt ausgeführt ist, so daß der während des Lande- oder Startmanövers bei ausgefahrenen Landeklappen im eingeklappten Zustand des Spoilers zwischen der hinteren Kante des Spoilers und der Oberfläche der Landeklappe gebildete Spalt verringerbar ist. Durch die Verlängerung der Hinterkante des Spoilers zusammen mit dem verwendeten Wertstoff des Bauelements und der speziellen Konstruktion, insbesondere der in Richtung zur Oberfläche der Tragfläche oder Landeklappe hin gekrümmten Ausführung, werden die erfindungsgemäßen Aufgaben gelöst, nachdem während der Landung oder während des Starts im niedrigen Geschwindigkeitsbereich der Spalt zwischen der hinteren Kante des Spoilers und der Landeklappe verringert und dadurch die aerodynamischen Verhältnisse verbessert werden, während das erfindungsgemäße Bauelement im höheren Geschwindigkeitsbereich des Flugzeuges die aerodynamischen Verhältnisse nicht wesentlich beeinflußt. Zusätzlich kommt es durch die Hinterkantenverlängerung des Spoilers zu einer Erhöhung der Überlappung des Spoilers mit der Landeklappe zur Erzielung einer "glatten" Tragfläche. Durch die verjüngende Ausbildung des Querschnitts des Bauelements zum freien Ende hin wird die Flexibilität des freien Endes erhöht und während des Reisefluges ein optimales Anliegen des Bauelements an der Tragfläche bei geringstem Widerstand erzielt und auch die schwingenden Massen am Bauteilende reduziert. Durch die zur Oberfläche der Tragfläche oder Landeklappe hin gekrümmte Ausführung des Bauelements wird eine Vorspannung des Bauelements erzielt, welche während der Landung und während des Starts des Flugzeuges einen definierten Spalt zwischen Spoiler und Landeklappe für optimale aerodynamische Verhältnisse einstellt. Entsprechende Flexibilität des Bauelements vorausgesetzt, wird das Bauelements während des Reisefluges bei glatter Tragfläche gegen die Krümmung bzw. Vorspannung an die Landeklappe gepresst. Erst durch das verwendete Material für das Bauelement, nämlich Verbundwerkstoff, insbesondere kohlenstoffaserverstärkter Kunststoff, werden die gewünschten Eigenschaften des Bauelements erzielt. Dieses Material ist durch geringes Gewicht und hohe mechanische Eigenschaften charakterisiert. Es ist auch die Verwendung von Kunststoffen mit Glasfasern oder Aramidfasern oder ähnliche Fasern möglich, wobei die Kohlenstoffasern allerdings die besten mechanischen Eigenschaften zeigen.

Wenn das Bauelement aus mehreren Lagen eines Gewebes, unidirektionalen Materials oder einer Kombination davon mit definierten Faserorientierungen in jeder Lage entsprechend den mechanischen Eigenschaften des Bauelements aufgebaut ist, können die gemäß der vorliegenden Erfindung unterschiedlichen Eigenschaften des Spoilers realisiert werden. Einerseits kann die geforderte Flexibilität, durch welche sich das Bauelement während des Reisefluges an die benachbarten Bauteile anschmiegt und andererseits die gewünschte Steifigkeit, daß das Bauelement während des Landefluges nicht weggebogen wird, erzielt werden.

Gemäß einem weiteren Merkmal der Erfindung ist vorgesehen, daß das Bauelement im wesentlichen über die gesamte Länge der hinteren Kante des Spoilers angeordnet ist.

Wenn das Bauelement aus mehreren Teilen aufgebaut ist, muß im Falle der Beschädigung eines Teiles des Bauelementes nicht das gesamte Bauelement ausgewechselt werden.

Die Flexibilität des freien Endes des Bauelements kann dadurch erhöht werden, daß das Bauelement am freien Ende im wesentlichen in Flugrichtung orientierte Einschnitte aufweist. Durch diese Einschnitte resultiert eine im wesentlichen kammartige Gestalt des Bauelements, und können die Eigenschaften des Bauelements optimiert werden.

Gemäß einem weiteren Erfindungsmerkmal ist vorgesehen, daß das Bauelement mit dem Spoiler lösbar verbunden ist, beispielsweise über Niet- oder Schraubverbindungen.

Alternativ dazu kann die Verbindung des Bauelements mit dem Spoiler auch über eine Klebeverbindung od. dgl. erfolgen.

Die erwähnten Merkmale gelten auch für den Fall, daß der Spoiler mit dem Bauelement einstückig hergestellt ist. Durch eine derartige integrierte Bauweise entfällt die Montage und Demontage des Bauelements bzw. der teile des Bauelements auf dem Spoiler. Allerdings muß bei Beschädigung eines Teiles des Spoilers dieser unter Umständen total getauscht werden.

Zur Vermeidung einer Kollision der erfindungsgemäßen Spoilerverlängerung mit der Landeklappe ist vorgesehen, daß das freie Ende des Bauelements abgerundet oder entgegen der Richtung zur Oberfläche der Tragfläche oder Landeklappe aufgebogen ausgeführt ist. Dadurch wird beim Einfahren der Landeklappen die mechanische Reibung mit der Kante des Bauelements verringert und ein sanfteres Anschmiegen an die darunterliegende Landeklappe erzielt.

Weitere und bereits oben erwähnte Merkmale der Erfindung werden anhand der beigefügten Abbildungen, welche eine Ausführungsvariante der Erfindung zeigen, näher erläutert. Darin zeigen:
- Fig. 1: eine Draufsicht auf einen Tragflügel eines Flugzeuges,
- Fig. 2: einen Spoiler mit der erfindungsgemäßen Verlängerung der Hinterkante in perspektivischer Ansicht,
- Fig. 3: den Spoiler gemäß Fig. 2 in der Ansicht von oben,
- Fig. 4: eine Ansicht auf den Spoiler gemäß Fig. 3 in Richtung des Pfeiles A,
- Fig. 5: eine Schnittbilddarstellung des Spoilers gemäß Fig. 3 entlang der Schnittlinie V-V,
- Fig. 6: eine Schnittbilddarstellung des Spoilers gemäß Fig. 3 entlang der Schnittlinie VI-VI, und
- Fig.7: das Detail einer besonderen Ausführungsvariante des erfindungsgemäßen Bauelements in Schnittbilddarstellung.

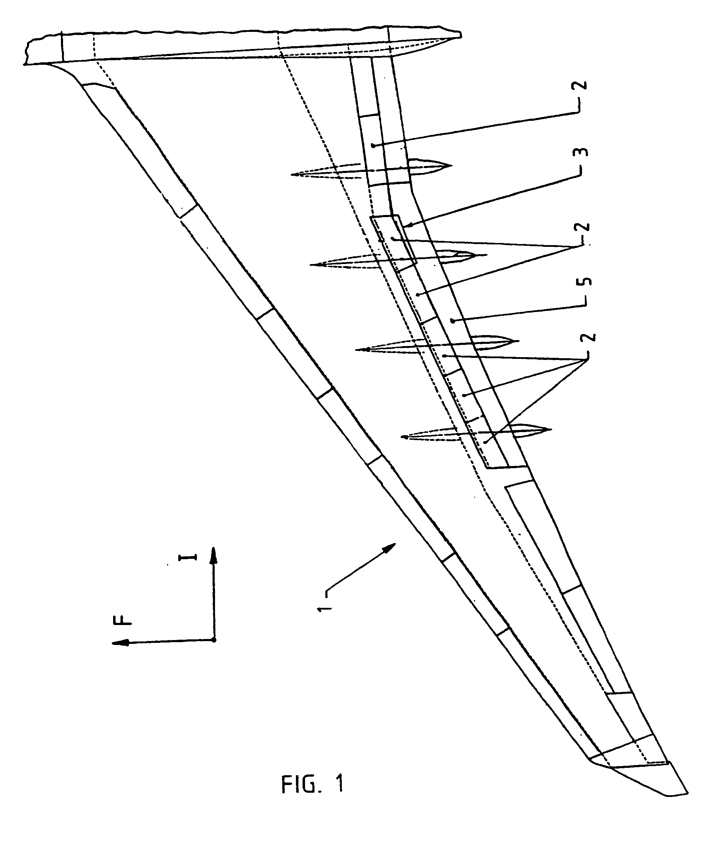

Fig. 1 zeigt einen Tragflügel 1 eines Flugzeuges in der Ansicht von oben. Der Pfeil F zeigt die Flugrichtung an, während der Pfeil 1 die Richtung zum Flugzeugrumpf (nicht dargestellt) angibt. An der hinteren Oberseite der Tragfläche sind vor den Landeklappen 5 mehrere Spoiler 2, im dargestellten Beispiel insgesamt sechs Spoiler 2 angeordnet. Die Spoiler 2 werden während der Landung zur Vernichtung des Auftriebes aufgeklappt. Wie bereits weiter oben erwähnt, haben die Spoiler 2 neben ihrer Funktion als Bremsklappen meist auch die Funktion einer Unterstützung des Querruders. Ein Spoiler 2 ist mit der erfindungsgemäßen Einrichtung versehen, die im wesentlichen aus einem Bauelement 3 besteht, welches an der entgegen der Flugrichtung F gesehenen hinteren Kante 4 des Spoilers 2 angeordnet ist. Im dargestellten Beispiel ist der vom Flugzeugrumpf aus gesehene zweite Spoiler 2 mit der erfindungsgemäßen Einrichtung versehen, da bei diesem Spoiler 2 der Spalt zwischen der hinteren Kante 4 des Spoilers 2 und der Landeklappe 5 am größten ist. Es können aber auch andere Spoiler 2 oder alle Spoiler 2 mit dem Bauelement 3 versehen sein. Einerseits muß das Bauelement 3 flexibel genug sein, sodaß es während der höheren Reisegeschwindigkeit keinen Widerstand entgegensetzt und andererseits steif genug, daß ein definierter Spalt zur Landeklappe für einen optimalen aerodynamischen Effekt erzielbar ist. Vorteilhafterweise ist das Bauelement 3 aus Faserverbundwerkstoffen aufgebaut, da so die einander entgegengesetzten Aufgaben zufriedenstellend gelöst werden können. Ebenso ist es denkbar, das Bauelement 3 selbst aus starrem Material herzustellen und über eine elastische Verbindung mit der hinteren Kante 4 des Spoilers 2 zu verbinden.

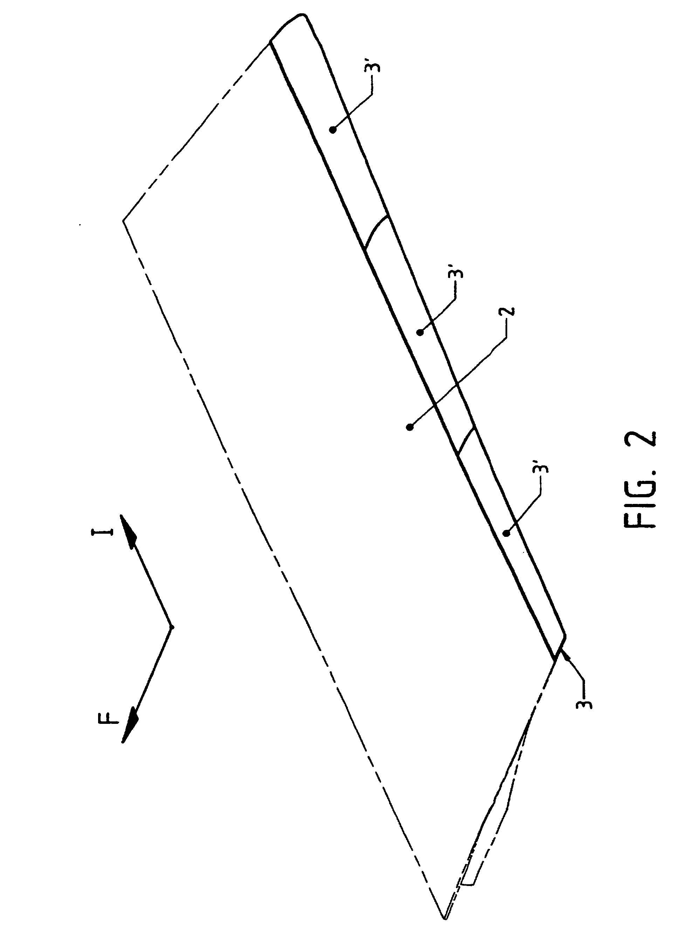

Aus Fig. 2 ist ein Spoiler 2 mit dem erfindungsgemäßen Bauelement 3 in perspektivischer Ansicht dargestellt. Der üblicherweise aus Verbundwerkstoffen aufgebaute Spoiler 2 weist im wesentlichen keilförmige Gestalt auf. Im dargestellten Beispiel ist das Bauelement 3 aus drei Teilen 3' aufgebaut. Dies hat den Vorteil, daß bei Beschädigung eines Teiles 3' nicht komplett ausgetauscht werden muß. Darüber hinaus ist durch die Trennung der Teile 3' die Flexibilität des Bauelements 3 erhöht. Dies kann auch durch Einschnitte erzielt werden, die am freien Ende des Bauelements 3 im wesentlichen in Flugrichtung F angeordnet sind (nicht dargestellt). Eine solche kammartige Konstruktion dient zur Optimierung der Eigenschaften der Hinterkantenverlängerung des Spoilers 2.

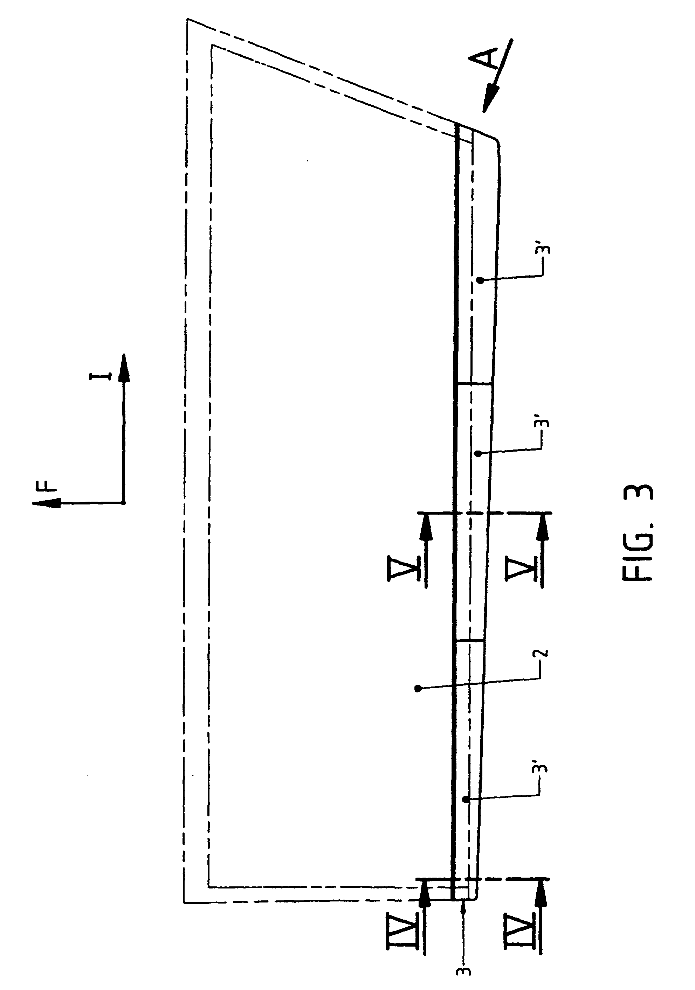

Fig. 3 zeigt eine Draufsicht auf den Spoiler 2 gemäß Fig. 2. Entsprechend der Form des Tragflügels 1 ist das Bauelement 3 nicht mit konstanter Breite, sondern in Richtung zum Flugzeugrumpf (Richtung des Pfeiles I) breiter werdend ausgeführt. Das Bauelement 3 ist im wesentlichen über die gesamte Länge des Spoilers 2 angeordnet.

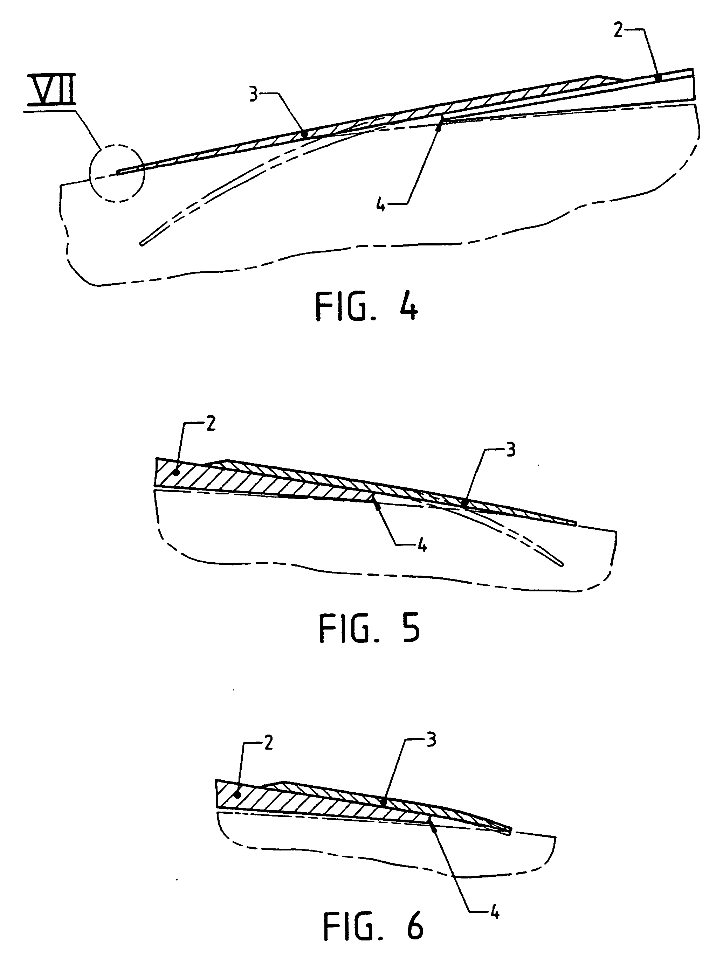

In der in Fig. 4 wiedergegebenen Seitenansicht auf den Spoiler 2 in Richtung des Pfeiles A gemäß Fig. 3 ist das Bauelement 3 für den Fall des Reisefluges (durchgehende Linien) und für den Landeflug (strichlierte Darstellung) wiedergegeben. Im Reiseflug ist der Spoiler 2 eingeklappt und das Bauelement 3 schmiegt sich im wesentlichen eben an die Oberfläche der Landeklappe 5 an und erhöht die Überlappung des Spoilers 2 mit der Landklappe 5. Während der Landung oder während des Starts ist der Spoiler 2 aufgeklappt und das Bauelement 3 ist entsprechend der Darstellung in Richtung der Tragfläche 1 oder Landeklappe 5 gekrümmt. Dabei muß die Steifigkeit des Bauelements 3 so gewählt werden, daß dieses im Landeanflug oder während des Startmanövers nicht vibriert oder flattert. Andererseits muß das Bauelement 3 so flexibel sein, daß dieses bei eingeklapptem Spoiler 2 entgegen der Krümmung an die Oberfläche der Landeklappe 5 gepreßt werden kann.

Aus den Schnittbilddarstellungen gemäß Fig. 5 und Fig. 6 ist die Ausführung des Bauelements 3 mit unterschiedlichem Querschnitt erkennbar. Die zum freien Ende des Bauelements 3 hin verjüngende Ausbildung trägt neben einer Verringerung der schwingenden Massen am Ende des Bauelements 3 auch zu einer besseren Auflage an der Oberfläche der Landeklappe 5 während des Reisefluges bei, resultierend in einer glatten Tragfläche 1.

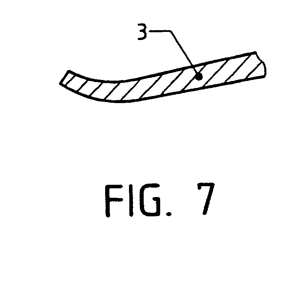

Das Detail gemäß Fig. 7 zeigt eine besondere Ausführungsvariante des erfindungsgemäßen Bauelements 3, bei der das freie Ende abgerundet oder entgegen der Richtung zur Oberfläche der Tragfläche 1 oder Landeklappe 5 aufgebogen ausgeführt ist. Dadurch wird verhindert, daß es nach der Landung, wenn die Landeklappen 5 eingefahren werden zu einer unzulässigen Reibung des Bauelements 3 an der Oberfläche der Landeklappe 5 kommt. Durch das abgerundete freie Ende wird ein sanftes Gleiten an der Oberfläche der Landeklappe erzielt.

Die Eigenschaften des Bauelements 3 bzw. des hinteren Endes des Spoilers 2 bei einstückiger Ausführung kann durch Variation des Querschnitts und Eigenschaften des Materials an die Erfordernisse angepaßt werden. Insbesondere bei der Verwendung von Verbundwerkstoffen kann durch eine gezielte Variation der Faserorientierung jeder Lage des Gewebes oder unidirektionalen Materials oder einer Kombination davon die erfindungsgemäße Aufgabe gelöst werden.

## Patentansprüche

1. Spoiler für Tragflächen (1) insbesondere von Flugzeugen, welcher Spoiler (2) während der Landung und während des Starts des Flugzeuges od. dgl. aufklappbar und während des Reisefluges einklappbar ist, wobei an der entgegen der Flugrichtung (F) gesehenen hinteren Kante (4) des Spoilers (2) ein Bauelement (3) angeordnet ist, welches über die hintere Kante (4) des Spoilers (2) hinausragt und bei eingefahrener Landeklappe (5) und eingeklapptem Spoiler (2) während des Reisefluges an der Oberfläche der Landeklappe (5) anliegt, **dadurch gekennzeichnet, dass** das Bauelement (3) aus Verbundwerkstoff, insbesondere aus kohlenstofffaserverstärktem Kunststoff aufgebaut ist, dass der Querschnitt des Bauelements (3) zum freien Ende hin verjüngend ausgebildet ist, und dass das freie Ende des Bauelements (3) in Richtung zur Oberfläche der Tragfläche (1) oder Landeklappe (5) hin gekrümmt ausgeführt ist, so dass der während des Lande- oder Startmanövers bei ausgefahrenen Landeklappen (5) im eingeklappten Zustand des Spoilers (2) zwischen der hinteren Kante (4) des Spoilers (2) und der Oberfläche der Landeklappe (5) gebildete Spalt verringerbar ist.

2. Spoiler nach Anspruch 1, **dadurch gekennzeichnet, dass** das Bauelement (3) aus mehreren Lagen eines Gewebes, unidirektionalen Materials oder einer Kombination davon mit definierten Faserorientierungen in jeder Lage entsprechend den mechanischen Eigenschaften des Bauelements (3) aufgebaut ist.

3. Spoiler nach Anspruch 1 oder 2, **dadurch gekennzeichnet, dass** das Bauelement (3) im Wesentlichen über die gesamte Länge der hinteren Kante (4) des Spoilers (2) angeordnet ist.

4. Spoiler nach einem der Ansprüche 1 bis 3, **dadurch gekennzeichnet, dass** das Bauelement (3) aus mehreren entlang der hinteren Kante (4) des Spoilers (2) nebeneinander angeordneten Teilen (3') aufgebaut ist.

5. Spoiler nach einem der Ansprüche 1 bis 4, **dadurch gekennzeichnet, dass** das Bauelement (3) am freien Ende im Wesentlichen in Flugrichtung (F) orientierte Einschnitte aufweist.

6. Spoiler nach einem der Ansprüche 1 bis 5, **dadurch gekennzeichnet, dass** das Bauelement (3) mit dem Spoiler (2) lösbar verbunden ist, beispielsweise über Niet- oder Schraubverbindungen.

7. Spoiler nach einem der Ansprüche 1 bis 6, **dadurch gekennzeichnet, dass** das Bauelement (3) mit dem Spoiler (2) über eine Klebeverbindung od. dgl. verbunden ist.

8. Spoiler nach einem der Ansprüche 1 bis 7, **dadurch gekennzeichnet, dass** der Spoiler (2) mit dem Bauelement (3) einstückig hergestellt ist.

9. Spoiler nach einem der Ansprüche 1 bis 8, **dadurch gekennzeichnet, dass** das freie Ende des Bauelements (3) abgerundet oder entgegen der Richtung zur Oberfläche der Tragfläche (1) oder Landeklappe (5) aufgebogen ausgeführt ist.

## Claims

1. A spoiler for wings (1) in particular of aircraft, which spoiler (2) can be unfolded during landing and during take-off of the aircraft or the like, and retracted during cruising, a structural element (3) being arranged on the trailing edge (4) of the spoiler (2), viewed in a direction opposite to a flight direction (F), which structural element (3) projects beyond the trailing edge (4) of the spoiler (2) and, with the landing flap (5) being pulled in and the spoiler (2) being retracted during cruising, abuts on the surface of the landing flap (5), **characterised in that** the structural element (3) is made of a composite material, in particular of carbon fiber reinforced plastic, that the cross-section of the structural element (3) tapers towards its free end, and that the free end of the structural element (3) is curved in a direction towards the surface of the wing (1) or landing flap (5) so that the gap formed between the trailing edge (4) of the spoiler (2) and the surface of the landing flap (5) can be reduced during the landing or take-off maneuver, with the landing flaps (5) extended and the spoiler (2) retracted.

2. A spoiler according to claim 1, **characterised in that** the structural element (3) is made of several layers of a fabric, unidirectional material or a combination thereof with a defined fiber orientation in each layer corresponding to the mechanical properties of the structural element (3).

3. A spoiler according to claim 1 or 2, **characterised in that** the structural element (3) is arranged substantially over the entire length of the trailing edge (4) of the spoiler (2).

4. A spoiler according to any one of claims 1 to 3, **characterised in that** the structural element (3) is made of several parts (3') arranged adjacently along the trailing edge (4) of the spoiler (2).

5. A spoiler according to any one of claims 1 to 4, **characterised in that** the structural element (3) has incisions on its free end oriented substantially in the flying direction (F).

6. A spoiler according to any one of claims 1 to 5, **characterised in that** the structural element (3) is detachably connected to the spoiler (2), e.g. via rivet or screw connections.

7. A spoiler according to any one of claims 1 to 6, **characterised in that** the structural element (3) is connected to the spoiler (2) by gluing or the like.

8. A spoiler according to any one of claims 1 to 7, **characterised in that** the spoiler (2) is integrally produced with the structural element (3) in one piece.

9. A spoiler according to any one of claims 1 to 8, **characterised in that** the free end of the structural element (3) is rounded or bent upwards contrary to the direction of the surface of the wing (1) or landing flap (5).

## Revendications

1. Spoiler pour surfaces portantes (1) notamment d'avions, lequel spoiler (2) peut être relevé pendant l'atterrissage et pendant le démarrage de l'avion ou analogue et peut être rétracte au cours du vol, dans lequel sur le bord arrière (4) du spoiler (2), vu à l'opposé de la direction de vol (F), est disposé un composant (3), qui fait saillie au-delà du bord arrière (4) du spoiler (2) et, lorsque les volets d'atterrissage (5) sont rétractés et que le spoiler (2) est rabattu pendant le déroulement du vol, s'applique sur la surface du volet d'atterrissage (5), **caractérisé en ce que** le composant (3) est réalisé en un matériau composite, notamment une matière plastique renforcée par des fibres de carbone, **en ce que** la section transversale du composant (3) est agencée de manière à se rétrécir en direction de l'extrémité libre, et **en ce que** l'extrémité libre du composant (3) est réalisée avec une forme cintrée en direction de la face supérieure de la surface portante (1) ou du volet d'atterrissage (5), de sorte que la fente formée entre le bord arrière (4) du spoiler (2) et la face supérieure du volet d'atterrissage (5) peut être réduite pendant la manoeuvre d'atterrissage ou de démarrage, lorsque les volets d'atterrissage (5) sont sortis, alors que le spoiler (2) est dans l'état rabattu.

2. Spoiler selon la revendication 1, **caractérisé en ce que** le composant (3) est formé de plusieurs couches d'un tissu, d'un matériau unidirectionnel ou d'une combinaison de ces éléments avec des orientations définies des fibres dans chaque couche, conformément aux caractéristiques mécaniques du composant (3).

3. Spoiler selon la revendication 1 ou 2, **caractérisé en ce que** le composant (3) est disposé essentiellement sur toute la longueur du bord arrière (4) du spoiler (2).

4. Spoiler selon l'une des revendications 1 à 3, **caractérisé en ce que** le composant (3) est constitué par plusieurs parties (3') qui sont disposées côte-à-côte le long du bord arrière (4) du spoiler (2).

5. Spoiler selon l'une des revendications 1 à 4, **caractérisé en ce que** le composant (3) possède, sur l'extrémité libre, des entailles orientées sensiblement dans la direction de vol (F).

6. Spoiler selon l'une des revendications 1 à 5, **caractérisé en ce que** le composant (3) est relié de façon amovible au spoiler (2), par exemple au moyen de liaisons rivetées ou vissées.

7. Spoiler selon l'une des revendications 1 à 6, **caractérisé en ce que** le composant (3) est relié au spoiler (2) par l'intermédiaire d'une liaison collée ou analogue.

8. Spoiler selon l'une des revendications 1 à 7, **caractérisé en ce que** le spoiler (2) est réalisé d'un seul tenant avec le composant (3).

9. Spoiler selon l'une des revendications 1 à 8, **caractérisé en ce que** l'extrémité libre du composant (3) est arrondie ou est réalisée en étant coudée à l'encontre de la direction de la face supérieure de la surface portante (1) ou du volet d'atterrissage (5).
